# EUROPÄISCHE PATENTSCHRIFT

(11) **EP 1 837 932 B1**
(45) Veröffentlichungstag und Bekanntmachung des Hinweises auf die Patenterteilung: **03.11.2010**
(21) Anmeldenummer: 07004734.5
(22) Anmeldetag: 08.03.2007
(51) Int. Cl.: H01M 2/04, H01M 2/10

(54) **Batteriegehäuse eines Bewegungsmelders**
Battery casing of a movement detector
Boîtier de pile d'un détecteur de mouvement

(30) Priorität: 24.03.2006 DE 102006013559
(43) Veröffentlichungstag der Anmeldung: 26.09.2007
(73) Patentinhaber: ABB AG, 68309 Mannheim (DE)
(72) Erfinder: Wiese, Michael, Dipl.-Ing., 42897 Remscheid (DE); Wieske, Stefan, Dipl.-Ing., 58285 Gevelsberg (DE); Schneider, Martin, 42499 Hückeswagen (DE); Diehl, Sven, Dipl.-Ing., 57078 Siegen (DE)

(56) Entgegenhaltungen:
- GB-A- 306 312
- GB-A- 2 076 884
- US-A- 5 333 022
- US-A1- 2004 018 420

## Beschreibung

Die Erfindung bezieht sich auf ein Bewegungsmelder-Batteriegehäuse, insbesondere Batteriegehäuse eines Funk-Bewegungsmelders.

Aus der GB 306 312 A ist ein zweiteiliges Akkumulator-Gehäuse bekannt, bestehend aus einem Unterteil und einem mit Durchgangsbohrungen für elektrische Anschlüsse versehenen Deckel, wobei Unterteil und Deckel über eine Gewindeverschraubung miteinander verbunden sind.

Aus der US 2004/01820 A1 ein aus Unterteil und Deckel bestehendes Batteriegehäuse bekannt, wobei eine Arretierung zwischen Unterteil und Deckel mittels Rastmittel respektive Rastlasche / Rastnase erfolgt.

Aus der GB 2 076 884 A ist ein zwei Platten miteinander verbindendes Scharnier bekannt, wobei zwei jeweils schneckenförmig ausgebildete Abschnitte ineinander greifen und derart nicht nur eine Drehbeweglichkeit sowie Längsverschiebbarkeit ermöglichen, sondern zusätzlich eine labyrinthartige Dichtung bilden, welche das Eindringen von Feuchtigkeit in das Scharnier unterbindet.

Aus der US 5 333 022 A ist ein Batteriegehäuse für eine Kamera mit einem drehbaren und einer Verschlussstellung verrastbaren Gehäusedeckel bekannt, wobei elektrische Kontaktlaschen im Gehäusedeckel selbst angeordnet sind und der Gehäusedeckel wasserdicht mit einem korrespondierenden Unterteil verbindbar ist.

Aus dem Katalog 2006 der Busch-Jaeger Elektro GmbH, BJE 0001-0-0985/08.05/0502-B, dpi 401481, Seiten 254 - 261 sind unterschiedliche Ausführungsformen von an Netzspannung zu betreibenden Bewegurigsmeldern bekannt. Bei nachträglicher Montage eines Bewegungsmelders bereitet das Erfordernis eines Netzanschlusses oft Schwierigkeiten (insbesondere entsteht ein hoher Montage-Kostenaufwand), so dass für derartige Anwendungen vorteilhaft ein Funk-Bewegungsmelder eingesetzt wird, welcher mittels einer Batterie (Langzeit-Batterie) gespeist wird und erfasste Sensorsignale über Funk an eine korrespondierende Funk-Empfangseinheit abgibt, welche auch die Aktorik zur Schaltung einer Beleuchtung aufweist.

Der Erfindung liegt die Aufgabe zugrunde, ein optimal gegen Witterungseinflüsse geschütztes Bewegungsmelder-Batteriegehäuse anzugeben.

Diese Aufgabe wird erfindungsgemäß gelöst durch ein Bewegungsmelder-Batteriegehäuse, bestehend aus einem Batteriegehäuse-Unterteil und einem Batteriegehäuse-Deckel,
- wobei Batteriegehäuse-Unterteil und Batteriegehäuse-Deckel über eine Labyrinth-Dichtung abgedichtet zusammenfügbar sind,
- wobei eine Arretierung zwischen Batteriegehäuse-Unterteil und Batteriegehäuse-Deckel mittels Rastmittel erfolgt,
- wobei das Batteriegehäuse-Unterteil mindestens einen Kabelaufnahmedom mit Durchgangsbohrung zur Durchführung mindestens einer elektrischen Leitung aufweist,
- wobei der Montagesockel des Bewegungsmelders aus einem eine Wandbefestigung ermöglichenden Montagesockel-Unterteil und der Montagesockel-Abdeckung besteht,
- wobei das Batteriegehäuse-Unterteil mindestens einen Klemmdom aufweist, welcher zum Eingriff in eine korrespondierende Klemmdom-Einsteckhülse in der Montagesockel-Abdeckung des Bewegungsmelders geeignet ist.

Die mit der Erfindung erzielbaren Vorteile bestehen insbesondere darin, dass die Batteriekontakte (Kontaktplatten und Verbindungskontaktplatten) korrosionsgeschützt sind. Dadurch werden durch schädliche Umwelteinflüsse bedingte aufwendige Reinigungs- und Wartungsaufgaben vollständig vermieden. Ebenfalls wird verhindert, dass Feuchtigkeit in das Batteriegehäuse eindringt und hierdurch Fehler oder Kurzschlüsse verursacht werden. Der Verschluss des Batteriegehäuses wird nur mittels Rastmittel hergestellt; somit wird keine zusätzliche Verschraubung benötigt, d. h. es entfällt jeglicher Werkzeugeinsatz bei einem Batteriewechsel.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1, 2: zwei Querschnitte durch einen Montagesockel eines Bewegungsmelders, insbesondere Funk-Bewegungsmelders,
- Fig. 3, 4: zwei perspektivische Ansichten auf ein Batteriegehäuse,
- Fig. 5: eine Sicht auf die Innenseite eines demontierten Batteriegehäuse-Deckels,
- Fig. 6: eine Sicht auf die Innenseite eines demontierten Batteriegehäuse-Unterteils,
- Fig. 7: eine Seitenansicht des Batteriegehäuses,
- Fig. 8: eine Sicht in den Innenraum einer Montagesockel-Abdeckung (Kappe),
- Fig. 9: einen kompletten Bewegungsmelder.

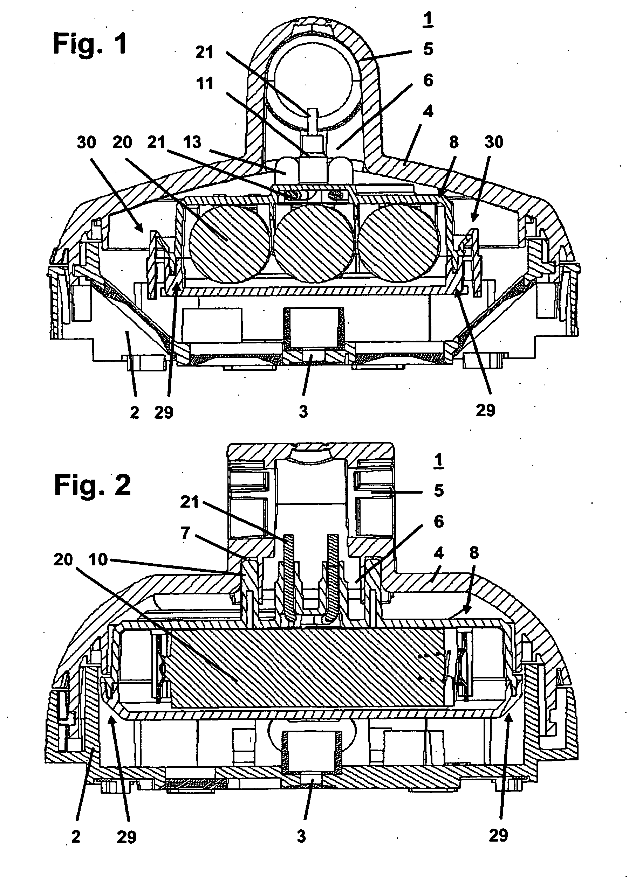

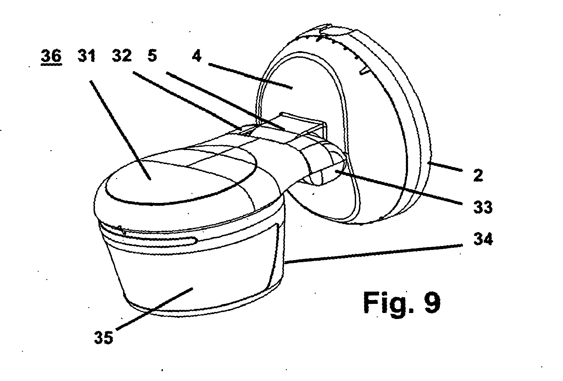

In den Fig. 1 und 2 sind zwei Querschnitte durch einen Montagesockel eines Bewegungsmelders, insbesondere Funk-Bewegungsmelders dargestellt, wobei die gezeigten Querschnitte jeweils um 90° gegeneinander versetzt sind. Der Montagesockel 1 des Bewegungsmelders besteht aus einem Montagesockel-Unterteil 2 und einer Montagesockel-Abdeckung oder Kappe 4. Mittig in der Kappe 4 ist eine Zentralöffnung 6 eingeformt. Über dieser Zentralöffnung 6 ist die Kappe 4 mit einer Auswölbung in Form eines Gelenk-Mittelabschnittes 5 versehen, wodurch ein Anbringen einer schwenkbaren Bewegungsmelderkopf-Haube (siehe Ziffer 31 in Fig. 9) ermöglicht wird.

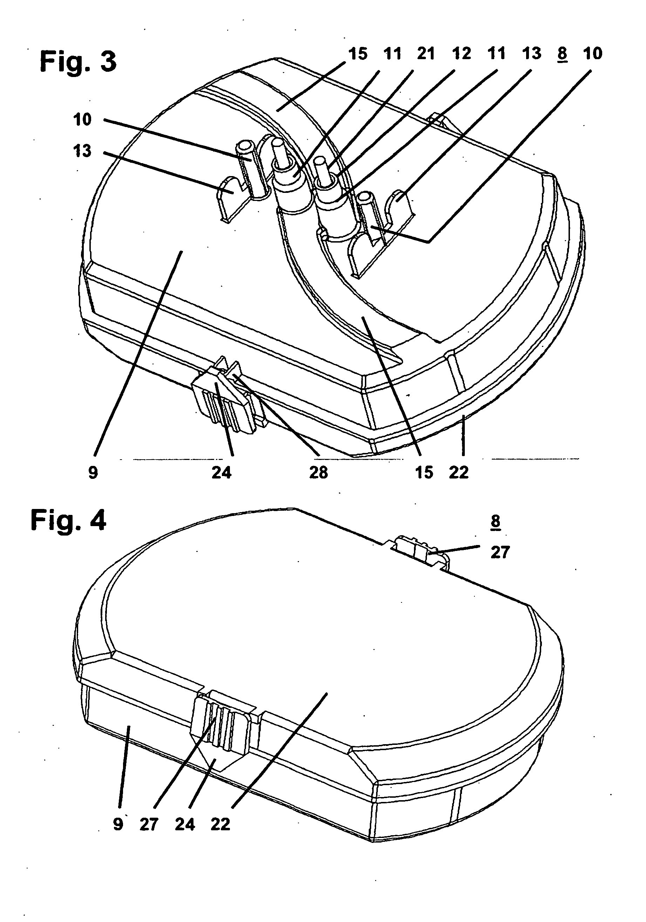

Im Montagesockel-Unterteil 2 ist mindestens eine Montage-Bohrung 3 vorgesehen, welche eine Wandbefestigung des Montagesockel-Unterteils 2 ermöglicht. Im zwischen Montagesockel-Unterteil 2 und Montagesockel-Abdeckung 4 gebildeten Innenraum befindet sich ein eingestecktes Batteriegehäuse 8, welches zur Aufnahme mindestens einer Batterie 20 geeignet ist. Das Batteriegehäuse 8 ist in ein Batteriegehäuse-Unterteil 9 und einen Batteriegehäuse-Deckel 22 zerlegbar (siehe auch Fig. 3, 4), wobei diese beiden Gehäuseteile über mindestens ein- vorzugsweise über zwei einander gegenüberliegende - Rastmittel 30 zusammengehalten werden. Die beiden Gehäuseteile des Batteriegehäuses 8 sind derart geformt, dass ihre zueinander stehenden Ränder unter Ausbildung einer Labyrinth-Dichtung 29 den Innenraum des Batteriegehäuses 8 gegenüber dem Umfeld abdichten.

Für die Befestigung des Batteriegehäuse-Unterteils 9 an der Montagesockel-Abdeckung 4
- weist das Batteriegehäuse-Unterteil 9 zwei Klemmdome 10 auf,
- weist die Montagesockel-Abdeckung 4 zwei hierzu korrespondierende Klemmdom-Einsteckhülsen 7 auf.

Sowohl die Klemmdom 10 als auch die hierzu korrespondierenden Klemmdom-Einsteckhülsen 7 sind vorzugsweise für einen verbesserten Halt konisch ausgebildet. Um ein Fehlstecken der Klemmdome 10 innerhalb der Montagesockel-Abdeckung 4 zu verhindern, sind neben den Klemmdomen 10 Laschen 13 am Batteriegehäuse-Unterteil 13 angeformt. Diese Laschen 13 setzen bei fehlerhaftem, verdrehtem Einbau des Batteriegehäuse-Unterteils 9 am Boden der Montagesockel-Abdeckung 4 auf, d. h. ein Festklemmen in einer fehlerhaften Position wird verhindert.

Die elektrische Energieversorgung von elektrischen/elektronischen Baukomponenten des Bewegungsmelders erfolgt über vorzugsweise zwei elektrische Leitungen 21, welche vom Innenraum des Batteriegehäuses 8 durch die Kabelaufnahmedome 11 zur Zentralöffnung 6 hin geführt sind. Durch die relativ langen Kabelaufnahmedome 11 ist eine zuverlässige Abdichtung insbesondere gegen Flüssigkeitseintritt sichergestellt. Vorzugsweise bestehen die Kabelaufnahmedome 11 zumindest teilweise aus einem elastischen Material, um ein "Anschmiegen" der Kabelaufnahmedome 11 um die elektrischen Leitungen 21 zu erzielen.

In den Fig. 3 und 4 sind zwei perspektivische Ansichten auf ein Batteriegehäuse 8 dargestellt, und zwar zeigt Fig. 3 die im montierten Zustand des Batteriegehäuses 8 zur Kappe 4 gerichtete Seite des Batteriegehäuse-Unterteils 9 und Fig. 4 den Batteriegehäuse-Deckel 22. Auf der zur Kappe 4 gerichteten Seite des Batteriegehäuse-Unterteils 9 sind insbesondere zu erkennen:
- zwei Nuten 15 zur Leitungsführung (für die elektrischen Leitungen 21), wobei diese Nuten 15 direkt zu den beiden Kabelaufnahmedomen 11 führen,
- zwei Kabelaufnahmedome 11, durch deren Durchgangsbohrungen 12 die elektrischen Leitungen 21 aus dem Innenraum des Batteriegehäuses 8 nach außen geführt werden,
- zwei Klemmdome 10,
- zwei Laschen 13 neben den Klemmdomen 10, um ein fehlerhaftes Einstecken des Batteriegehäuse-Unterteils 9 innerhalb der Kappe 4 zu verhindern.

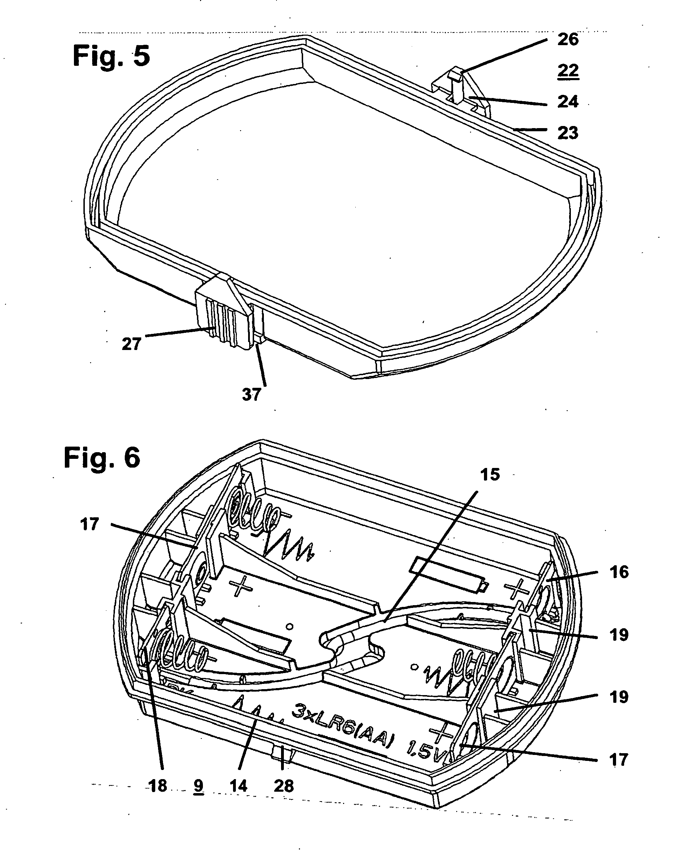

Für die Rastverbindung zwischen Batteriegehäuse-Unterteil 9 und Batteriegehäuse-Deckel 22 sind folgende Maßnahmen vorgesehen:
- an zwei sich gegenüberliegenden Seiten des Batteriegehäuse-Unterteils 9 ist jeweils ein Rastpodest 28 ausgebildet,
- der Batteriegehäuse-Deckel 22 weist korrespondierend hierzu an sich gegenüberliegenden Seiten jeweils eine Rastlasche 24 auf, deren endseitige Rastnasen (siehe Ziffer 26 gemäß Fig. 5) zur Verrastung mit den Rastpodesten 28 dienen,
- jede Rastlasche 24 ist endseitig mit einer Lösetaste 27 versehen, um das Batteriegehäuse-Unterteil 9 von dem Batteriegehäuse-Deckel 22 lösen zu können. Die Oberfläche der Lösetaste 27 kann mit Rippen versehen sein, um eine bessere Griffigkeit zum Betätigen für den Anwender zu erzielen.

Alternativ zur vorstehend erläuterten Rastverbindung ist es selbstverständlich auch möglich, lediglich eine einzige Rastlaschen/Rastpodest-Konfiguration 24/26/27/28vorzusehen, während die weitere Rastlaschen/Rastpodest-Konfiguration durch eine gelenkige Verbindung, z. B. ein Filmscharnier, ersetzt ist.

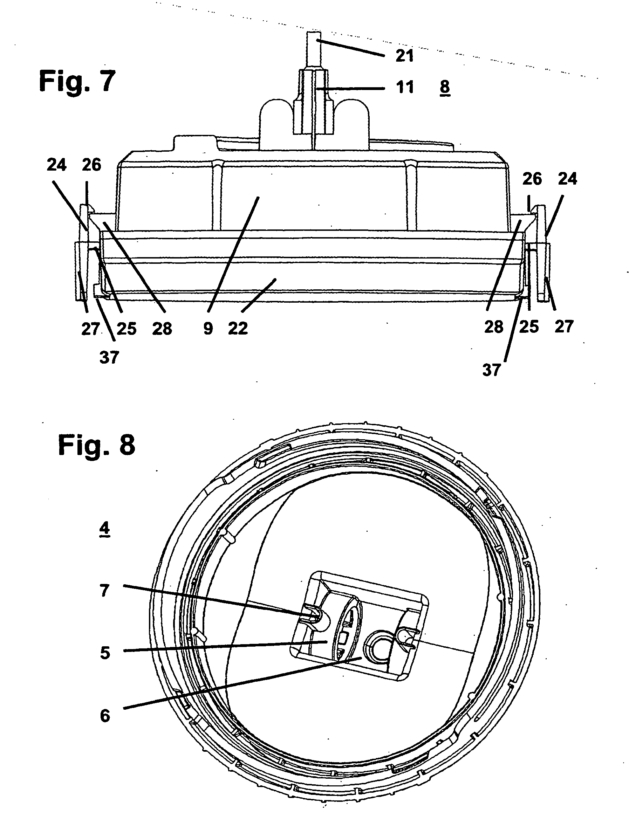

In Fig. 5 ist eine Sicht auf die Innenseite eines demontierten Batteriegehäuse-Deckels 22 dargestellt. Es ist zu erkennen, dass an der Rastlasche 24 eine endseitige Rastnase 26 ausgebildet ist, um einen sicheren Halt am Rastpodest 28 erreichen und somit eine selbsthaltende Verbindung zwischen Batteriegehäuse-Unterteil 9 und Batteriegehäuse-Deckel 22 herzustellen. Sowohl die Lösetaste 27 als auch die Rastlasche 24 mit endseitiger Rastnase 26 sind über einen Verbindungssteg (siehe Ziffer 25 in Fig. 7) mit dem Batteriegehäuse-Unterteil 9 verbunden, wodurch eine Hebelwirkung für die Lösetaste 27 erzielt wird. Die mögliche Schwenkbewegung der Lösetaste 27 wird begrenzt durch einen am Batteriegehäuse-Deckel 22 angeformten Abstandssteg 37, gegen den die Lösetaste 27 bei Betätigung schlägt/presst.

Wie bereits in den Fig. 1 und 2 erkennbar ist, wird die Labyrinth-Dichtung 29 durch eine Dichtlippe gebildet, welche abdichtend in eine Dichtungsnut eingreift. Fig. 5 zeigt die randseitig des Batteriegehäuse-Deckels 22 ausgebildete Dichtungsnut 23 der Labyrinth-Dichtung 29.

In Fig. 6 ist eine Sicht auf die Innenseite eines demontierten Batteriegehäuse-Unterteils 9 dargestellt. Es ist die randseitig des Batteriegehäuse-Unterteils 9 ausgebildete, vorzugsweise aus einem elastischen Material geformte Dichtlippe 14 der Labyrinth-Dichtung 29 erkennbar. Ebenfalls am Rand des Batteriegehäuse-Unterteils 9 sind die positionsgerecht den endseitigen Rastnasen 26 der Rastlaschen 24 des Batteriegehäuse-Deckels 22 zugeordneten Rastpodeste 28 angeformt.

Im Innenraum des Batteriegehäuse-Unterteils 9 sind mehrere aus einem isolierenden Kunststoff bestehende Haltelaschen 19 zur Montage von insgesamt vier Kontaktplatten / Verbindungskontaktplatten aus elektrisch leitfähigem Material vorgesehen. Diese Haltelaschen 19 fixieren
- eine Kontaktplatte 18 mit Leitungsanschluss und Kontaktfeder,
- eine Kontaktplatte 16 mit Leitungsanschluss,
- zwei Verbindungskontaktplatten 17 mit Kontaktfedern.

Wie Fig. 6 zeigt, können drei separate Batterien in das Batteriegehäuse-Unterteil 9 eingelegt werden, wodurch sich unter Verwendung der vier Kontaktplatten / Verbindungskontaktplatten 18, 16, 17 eine elektrische Serienschaltung dieser Batterien 20 ergibt. Die Kontaktplatten 16, 18 sind mit den vorstehend erwähnten elektrischen Leitungen 21 verbunden. Wie in Fig. 6 zu erkennen ist,
- führt die erste Nut 15 im Batteriegehäuse-Unterteil 9 die erste elektrische Leitung 21 von der Kontaktplatte 16 mit Leitungsanschluss zur Durchgangsbohrung 12 des ersten Kabelaufnahmedoms,
- führt die zweite Nut 15 im Batteriegehäuse-Unterteil 9 die zweite elektrische Leitung 21 von der Kontaktplatte 18 mit Leitungsanschluss und Kontaktfeder zur Durchgangsbohrung 12 des zweiten Kabelaufnahmedoms.

In Fig. 7 ist eine Seitenansicht des Batteriegehäuses 8 dargestellt. Hierbei ist die Verrastung (Rastmittel 30 gemäß Fig. 1) zwischen Batteriegehäuse-Unterteil 9 und Batteriegehäuse-Deckel 22 zu erkennen, bestehend aus den Rastlaschen 24 mit endseitigen Rastnasen 26, den Lösetasten 27 und den Rastpodesten 28. Sowohl die Lösetasten 27 als auch die Rastlaschen 24 mit endseitigen Rastnasen 26 sind mit dem Batteriegehäuse-Deckel 9 über jeweils einen Verbindungssteg 25 (vorzugsweise einstückig) verbunden, um gegebenenfalls mit der Lösetaste 27 eine gewünschte Hebelwirkung realisieren zu können. Bei geschlossenem Batteriegehäuse 8 bildet die endseitige Rastnase 26 einen Formschluss mit dem Rastpodest 28, was eine ungewollte Demontage des Deckels des Batteriegehäuses 8 verhindert. An der Außenseite des Batteriegehäuse-Deckels 22 ist die Position der Lösetaste 27 gegenüber dem Abstandssteg 37 erkennen. Mit Hilfe des Abstandssteges 37 wird ein eventuelles, Überbiegen und damit nachfolgendes Schädigen des Verbindungsstegs 25 und der Lösetaste 27 zuverlässig vermieden.

Fig. 7 zeigt ferner einen Kabelaufnahmedom 11 mit durchgeführter elektrischer Leitung 21.

In Fig. 8 ist eine Sicht in den Innenraum einer Montagesockel-Abdeckung oder Kappe gezeigt. Vorzugsweise zentral innerhalb der Kappe 4 ist, wie in Fig. 1 bereits beschrieben, die Zentralöffnung 6 angeordnet. Diese Zentralöffnung 6 wird nach außen durch den Gelenk-Mittelabschnitt 5 begrenzt. An der Montagesockel-Abdeckung 4 sind die beiden Klemmdom-Einsteckhülsen 7 eingeformt (korrespondierend zu den Positionen der Klemmdome 10 des Batteriegehäuse-Unterteils 9). Die spezielle Auswölbung der Montagesockel-Abdeckung 4 ermöglicht das Eintauchen der Laschen 13 des Batteriegehäuse-Unterteils 9 unmittelbar neben den Klemmdom-Einsteckhülsen 7. Wird versehentlich versucht, das Batteriegehäuse-Unterteil 9 verdreht zur korrekten Montageposition in die Montagesockel-Abdeckung 4 einzustecken, stoßen die Laschen 13 gegen das "Gewölbe" der Montagesockel-Abdeckung 4.

In Fig. 9 ist ein kompletter Bewegungsmelder 36 dargestellt. Dieser besteht aus dem , Montagesockel-Unterteil 2, auf dem die Montagesockel-Abdeckung (Kappe) 4 montiert ist. Die Kappe 4 weist den Gelenk-Mittelabschnitt 5 auf, wie vorstehend ausgeführt. Der Getenk-Mittetabschnitt 5 ist durch zwei Gelenk-Seitenabschnitte 32 und einen durch den Gelenk-Mittelabschnitt 5 und die beiden Gelenk-Seitenabschnitte 32 greifenden Gelenkzapfen mit der Bewegungsmelderkopf-Haube 31 verbunden, wobei eine Gelenkabdeckung 33 den Gelenkzapfen verdeckt. Die Bewegungsmelderkopf-Haube 31 beinhaltet im Wesentlichen einen Sensorkopf 34 inklusiver Elektronik und Einstellungs-Stiften sowie ein optisches System 35.

Bei dem vorstehend im Einzelnen erläuterten Ausführungsbeispiel sind zwei Klemmdome 10, zwei Kabelaufnahmedome 11 und zwei Rastmittel 30 vorgesehen. Abweichend hiervon sind selbstverständlich auch Ausführungsformen realisierbar, welche
- einen Klemmdom oder drei, vier usw. Klemmdome aufweisen und/oder
- einen Kabelaufnahmedom oder drei, vier usw. Kabelaufnahmedome aufweisen und/oder
- ein Rastmittel oder drei, vier usw. Rastmittel aufweisen.

Beim vorstehenden Ausführungsbeispiel weist der Batteriegehäuse-Deckel 22 die Dichtungsnut 23 auf, während das Batteriegehäuse-Unterteil 9 mit der Dichtlippe 14 versehen ist. Alternativ kann selbstverständlich auch umgekehrt der Batteriegehäuse-Deckel 22 mit der Dichtlippe 14 versehen sein und das Batteriegehäuse-Unterteil 9 die Dichtungsnut 23 aufweisen.

Üblicherweise ist der Bewegungsmelder 39 an einer Wand in einer Höhe von ca. 3 m über dem Boden montiert, d. h. für einen Batteriewechsel ist der Einsatz einer Leiter erforderlich. Das Öffnen und Schließen des Batteriegehäuses 8 mit Batteriegehäuse-Deckel 22 für den Batteriewechsel ist vorteilhaft ohne Werkzeugeinsatz möglich. Insbesondere ist es auch nicht nötig, eine Schraube zu lösen.

Der Bewegungsmelder 36 inklusive Montagesockel-Abdeckung 4 wird zunächst durch eine Drehbewegung (Bajonett-Verschluss) vom Montagesockel-Unterteil 2 demontiert. In der Montagesockel-Abdeckung 4 befindet sich das vorstehend im Einzelnen beschriebene Batteriegehäuse 8, dessen Batteriegehäuse-Deckel 22 durch Rastmittel 30 am Batteriegehäuse-Unterteil 9 befestigt ist. Durch Betätigen der Lösetasten 27 wird das Batteriegehäuse 8 geöffnet. Ein Auswechseln der Batterien ist nunmehr in einfacher Weise möglich. Nach Schließen des Batteriegehäuses 8 durch Verrasten des Batteriegehäuse-Deckels 22 wird der Bewegungsmelder 36 inklusive Montagesockel-Abdeckung 4 wieder am Montagesockel-Unterteil 2 befestigt.

Die gleiche Montagesockel-Abdeckung 4 und auch das gleiche Montagesockel-Unterteil 2 können vorteilhaft sowohl für einen netzbetriebenen Bewegungsmelder als auch für einen Funk-Bewegungsmelder verwendet werden:
- Bei einem netzbetriebenen Bewegungsmelder entfällt das Batteriegehäuse 8. In das Montagesockel-Unterteil 2 wird zusätzlich ein Klemmenkasten zur Installation der aus der Wand austretenden Netzleitungen eingesteckt.
- Bei einem Funk-Bewegungsmelder wird das Batteriegehäuse 8 mittels der Klemmdome 10 innerhalb der Montagesockel-Abdeckung 4 festgesteckt. Das Montagesockel-Unterteil wird ohne Klemmenkasten verwendet.

### Bezugszeichenliste:

- 1: Montagesockel eines Bewegungsmelders
- 2: Montagesockel-Unterteil
- 3: Montage-Bohrung zur Wandbefestigung
- 4: Montagesockel-Abdeckung (Kappe)
- 5: Gelenk-Mittelabschnitt
- 6: Zentralöffnung
- 7: Klemmdom-Einsteckhülse
- 8: Batteriegehäuse
- 9: Batteriegehäuse-Unterteil
- 10: Klemmdome
- 11: Kabelaufnahmedome
- 12: Durchgangsbohrung
- 13: Laschen
- 14: Dichtlippe der Labyrinth-Dichtung
- 15: Nuten zur Leitungsführung
- 16: Kontaktplatte mit Leitungsanschluss
- 17: Verbindungskontaktplatte mit Kontaktfeder
- 18: Kontaktplatte mit Leitungsanschluss und Kontaktfeder
- 19: Haltelaschen für Kontaktplatten / Verbindungskontaktplatten
- 20: Batterien
- 21: elektrische Leitung
- 22: Batteriegehäuse-Deckel
- 23: Dichtungsnut der Labyrinth-Dichtung
- 24: Rastlasche
- 25: Verbindungssteg
- 26: endseitige Rastnase
- 27: Lösetaste
- 28: Rastpodest
- 29: Labyrinth-Dichtung
- 30: Rastmittel
- 31: Bewegungsmelderkopf-Haube
- 32: Gelenk-Seitenabschnitt
- 33: Gelenkabdeckung mit verdecktem Gelenkzapfen
- 34: Sensorkopf inklusive Elektronik und Einstellungs-Stiften
- 35: optisches System
- 36: Bewegungsmelder
- 37: Abstandssteg

## Patentansprüche

1. Bewegungsmelder-Batteriegehäuse (8), bestehend aus einem Batteriegehäuse-Unterteil (9) und einem Batteriegehäuse-Deckel (22),
• wobei Batteriegehäuse-Unterteil (9) und Batteriegehäuse-Deckel (22) über eine Labyrinth-Dichtung (29) abgedichtet zusammenfügbar sind,
• wobei eine Arretierung zwischen Batteriegehäuse-Unterteil (9) und Batteriegehäuse-Deckel (22) mittels Rastmittel (30) erfolgt,
• wobei das Batteriegehäuse-Unterteil (9) mindestens einen Kabelaufnahmedom (11) mit Durchgangsbohrung (12) zur Durchführung mindestens einer elektrischen Leitung (21) aufweist,
• wobei der Montagesockel (1) des Bewegungsmelders aus einem eine Wandbefestigung ermöglichenden Montagesockel-Unterteil (2) und der Montagesockel-Abdeckung (4) besteht,
• wobei das Batteriegehäuse-Unterteil (9) mindestens einen Klemmdom (10) aufweist, welcher zum Eingriff in eine korrespondierende Klemmdom-Einsteckhülse (7) in der Montagesockel-Abdeckung (4) des Bewegungsmelders (36) geeignet ist.

2. Bewegungsmelder-Batteriegehäuse nach Anspruch 1, **dadurch gekennzeichnet, dass** zur Ausbildung der Labyrinth-Dichtung (29) das Batteriegehäuse-Unterteil (9) eine Dichtlippe (14) aufweist und der Batteriegehäuse-Deckel (22) mit einer Dichtungsnut (23) versehen ist.

3. Bewegungsmelder-Batteriegehäuse nach Anspruch 1, **dadurch gekennzeichnet, dass** zur Ausbildung der Labyrinth-Dichtung (29) das Batteriegehäuse-Unterteil (9) mit einer Dichtungsnut (23) versehen ist und der Batteriegehäuse-Deckel (22) eine Dichtlippe (14) aufweist.

4. Bewegungsmelder-Batteriegehäuse nach einem der vorstehenden Ansprüche, **dadurch gekennzeichnet, dass** zur Ausbildung der Rastmittel (30) der Batteriegehäuse-Deckel (2) mit mindestens einer Rastlasche (24) und das Batteriegehäuse-Unterteil (9) mit mindestens einem hierzu korrespondierenden Rastpodest (28) zum Eingriff einer endseitigen Rastnase (26) der Rastlasche (24) versehen ist.

5. Bewegungsmelder-Batteriegehäuse nach Anspruch 4, **dadurch gekennzeichnet, dass** an der Rastlasche (24) eine Lösetaste (27) zum Entriegeln des Rastmittels (39) vorgesehen ist.

## Claims

1. A battery housing (8) for a motion detector, consisting of a lower part (9) and a cover (22) of the battery housing,
- with the lower part (9) and the cover (22) being sealed together by a labyrinth seal (29);
- with the locking between the lower part (9) and the cover (22) of the battery housing occurring by means of latching means (30);
- with the lower part (9) of the battery housing comprising at least one cable retaining unit (11) with through-hole (12) for feeding through at least one electric cable (21);
- with the mounting base (1) of the motion detector consisting of a lower part (2) of the mounting base for enabling fastening to the wall and a cover (4) of the mounting base;
- with the lower part (9) of the battery housing comprising at least one clamping mandrel (10) which is capable of engagement in a corresponding insertion sleeve (7) for the clamping mandrel in the cover (4) of the mounting base of the motion detector (36).

2. A battery housing for a motion detector according to claim 1, **characterized in that** the lower part (9) of the battery housing comprises a sealing lip (14) for forming the labyrinth seal (29) and the cover (22) of the battery housing is provided with a sealing groove (23).

3. A battery housing for a motion detector according to claim 1, **characterized in that** for forming the labyrinth seal (29) the lower part (9) of the battery housing is provided with a sealing groove (23) and the cover (22) of the battery housing comprises a sealing lip (14).

4. A battery housing for a motion detector according to one of the preceding claims, **characterized in that** for forming the latching means (30) the cover (2) of the battery housing is provided with at least one latching lug (24) and the lower part (9) of the battery housing with at least one latching platform (28) corresponding thereto for the engagement of an end-side latching catch (26) of the latching lug (24).

5. A battery housing for a motion detector according to claim 4, **characterized in that** a release button (27) for unlocking the latching means (39) is provided on the latching lug (24).

## Revendications

1. Boîtier de batterie de détecteur de présence d'intrus (8), composé d'une partie inférieure de boîtier de batterie (9) et d'un couvercle de boîtier de batterie (22),
• la partie inférieure du boîtier de batterie (9) et le couvercle du boîtier de batterie (22) étant joignables de façon étanche sur un labyrinthe d'étanchéité (29),
• un blocage se produisant entre la partie inférieure du boîtier de batterie (9) et le couvercle de boîtier de batterie (22) au moyen d'un dispositif de blocage (30),
• la partie inférieure du boîtier de batterie (9) présentant au moins un dôme de retenue de câble (11) avec alésage débouchant (12) pour la mise en place d'au moins une ligne électrique (21),
• le socle d'assemblage (1) du détecteur de présence d'intrus se composant de la partie inférieure du socle d'assemblage (2) permettant une fixation murale et du couvercle du socle d'assemblage (4),
• la partie inférieure du boîtier de batterie (9) présentant au moins un dôme de serrage (10) lequel est approprié à l'intervention dans un cône de remplacement de dôme de serrage correspondant (7) dans le couvercle du socle d'assemblage (4) du détecteur de présence d'intrus (36).

2. Boîtier de batterie de détecteur de présence d'intrus selon la revendication 1, **caractérisé en ce que** la partie inférieure du boîtier de batterie (9) présente une lèvre d'étanchéité (14) pour la formation du labyrinthe d'étanchéité (29) et le couvercle du boîtier de batterie (22) est prévu avec une rainure pour la garniture (23).

3. Boîtier de batterie de détecteur de présence d'intrus selon la revendication 1, **caractérisé en ce que** la partie inférieure du boîtier de batterie (9) est prévue avec une rainure pour la garniture (23) pour la formation du labyrinthe d'étanchéité (29) et le couvercle du boîtier de batterie (22) présente une lèvre d'étanchéité (14).

4. Boîtier de batterie de détecteur de présence d'intrus selon l'une des revendications précédentes, **caractérisé en ce que** le couvercle du boîtier de batterie (2) est prévu avec au moins une attache à cran (24) pour la formation du dispositif de blocage (30) et la partie inférieure du boîtier de batterie (9) est prévue avec au moins un pallier à cran (28) lui correspondant pour la intervention d'un ergot extérieur (26) situé à l'extrémité de l'attache à cran (24).

5. Boîtier de batterie de détecteur de présence d'intrus selon la revendication 4, **caractérisé en ce qu'**une touche de desserrage (27) de l'attache à cran (24) est prévue pour le déverrouillage du dispositif de blocage (39).
